(19) Europäisches Patentamt

European Patent Office

Office européen des brevets

(11) **EP 1 362 431 B1**

(12) **EUROPEAN PATENT SPECIFICATION**

(45) Date of publication and mention
of the grant of the patent:
**31.05.2006 Bulletin 2006/22**

(51) Int Cl.:
*H04B 1/40* (2006.01)          *H04B 1/28* (2006.01)
*H04Q 7/30* (2006.01)

(21) Application number: **02712071.6**

(22) Date of filing: **14.02.2002**

(86) International application number:
**PCT/GB2002/000639**

(87) International publication number:
**WO 2002/067450 (29.08.2002 Gazette 2002/35)**

(54) **DIGITAL INTERFACE BETWEEN ANALOGUE RF HARDWARE AND DIGITAL PROCESSING HARDWARE**

DIGITALE SCHNITTSTELLE ZWISCHEN ANALOGER RF-HARDWARE UND DIGITALER VERARBEITUNGSHARDWARE

INTERFACE NUMERIQUE ENTRE DU MATERIEL RF ANALOGUE ET DU MATERIEL DE TRAITEMENT NUMERIQUE

(84) Designated Contracting States:
**AT BE CH CY DE DK ES FI FR GB GR IE IT LI LU MC NL PT SE TR**

(30) Priority: **16.02.2001 GB 0103903**

(43) Date of publication of application:
**19.11.2003 Bulletin 2003/47**

(73) Proprietor: **Radioscape Limited**
**London NW1 4DS (GB)**

(72) Inventors:
• **FERRIS, Gavin, Robert**
**London N19 5LT (GB)**

• **UDY, Christopher, Alfred**
**London SW18 5SB (GB)**

(74) Representative: **Langley, Peter James**
**Origin Limited,**
**52 Muswell Hill Road**
**London N10 3JR (GB)**

(56) References cited:
**WO-A-96/21305          WO-A-99/10976**
**WO-A-99/37099**

**Description**

**BACKGROUND TO THE INVENTION**

1. Field of the Invention

This invention relates to a digital interface between analogue RF hardware and digital processing hardware. It is relevant to Software Defined Radio (SDR) and finds particular application in, for example, SDR basestations.

2. Description of the prior art

A basestation is a transceiver node in a radio communications system, such as UMTS (Universal Mobile Telephony System). Conventionally, one basestation communicates with multiple user equipment terminals. Digital radio basestations (Node Bs) include analogue RF (Radio Frequency) hardware components; these components receive RF signals from an antenna and down convert them to lower frequency signals (e.g. a real frequency at low IF (intermediate frequency) or quadrature components (IQ) at zero IF). These IF signals are then digitised by an ADC (Analogue to Digital Convertor) into the digital domain and then passed to digital processing hardware to extract useful information. The inverse process occurs for transmission - a DAC accepts digital data from digital processing hardware, synthesises an analogue signal and passes these signals up via an upconverter to a RF antenna.

The skills needed for analogue RF hardware design are however very different from those needed for designing digital processing hardware. In practice, this has meant that only relatively large organisations have been able to design and build basestations, since only they are able to support the large, integrated design teams with skill sets that extend across both analogue RF and digital processing hardware design. This in turn has led to the analogue RF side and the digital processing hardware side being very closely integrated together (as opposed to being cleanly separable, modular designs, for example). The interfaces between them are closed and proprietary as opposed to open (an open interface is one which is published so that anyone can read it). The consequence of the closed and proprietary interfaces is that conventional basestations are inflexible and costly.

The monolithic approach exemplified in a conventional basestation can be contrasted with the approach of Software Defined Radio (SDR); SDR is a term used to refer to a collection of generally reconfigurable hardware and software components that enable the production of flexible, future-proofed products for wireless network infrastructure and end user terminals. SDR has the potential to allow multi-mode, multi-band, multi-functional wireless devices that can be enhanced using software upgrades. With the use of software comes the advantage of modularity and re-use, which may be extended to the integration of multiple vendor Intellectual Property (IP) on a single product. It also allows the use of a single hardware platform to cover many distinct standards.

However, at the moment, realistic SDR systems cannot be implemented *entirely* in software, for most wireless standards. This is because, first, it is not yet possible to convert data between the analogue and digital domains rapidly enough to analyse or synthesize signals directly at their target radio frequency (RF). As a consequence, current broadcast and communications equipment must (as noted above) make use of analogue circuitry to convert data to (from) either a real signal at a low intermediate frequency (IF), or else quadrature components at a zero Hz IF (IQ), at which point it may be digitised (synthesised) with the use of an ADC (DAC).

Secondly, although it would appear that once within the digital domain, flexible processing elements may be used to transform the signals using fully configurable software techniques, this is not in fact quite true ('software' in this context, covers also configurations loaded into FPGA devices). With the increase in required data payloads for communications and broadcast systems, very sophisticated modulation and channel processing algorithms are rapidly being brought into play (for example, the move towards Turbo codes to replace standard convolutional codes; sophisticated multi-user detection (MUD), and antenna array processing, to name but a few), with the result that instruction loading on such systems is increasing with time faster than Moore's law. Consequently, significant parallelism must be utilised in system designs and, because of the lack of appropriate generic parallel processors, this is most commonly achieved through the use of hardware, which is either reprogrammable (e.g., a Xilinx FPGA), in which case it is expensive, militating against its widespread use, or not, in which case the resultant system does not really embody the true goals of SDR as the final system will not be entirely reprogrammable. So at present, SDR systems tend to be somewhat hybrid designs, consisting of (a) analogue RF units (b) generalised and specialised digital execution hardware, and (c) software elements running on that hardware. A common feature is the requirement for some kind of custom driver to send data between the analogue RF unit and the digital execution hardware: reference may be made to WO 9937099 (MIT) and WO 99 10976 (Radioscape), which exemplify this.

Reference should also be made to the GSM A-bis interface, which specifies a complete protocol allowing the independent design of analogue RF hardware and processing apparatus.

## SUMMARY OF THE INVENTION

In a first aspect of the invention, there is a digital processing apparatus adapted to send digital data to, and to receive digital data from, analogue RF hardware, in which the apparatus sends and receives the data using an open communications protocol with a publicly available specification that is generic and not custom designed for either the digital processing apparatus or the analogue RF hardware, in which lower layers of the open communications protocol are based on the open transport and management protocols UDP/IP and SNMP.

A SDR may run on the digital processing hardware; the adoption of the above interface will facilitate the uptake of SDR, both as a design-time and run-time technology, as it enables the production of analogue RF components independently from the digital domain hardware and SDR software. Hence, experts in analogue RF hardware design can now design for this interface; separately, experts in digital processing hardware can also design for this interface. But critically, these separate groupings no longer need to be tightly integrated with each other within a single organisation. This is a critical point: SDR is a rapidly growing technology that is set to have far reaching impacts upon both infrastructure and terminal design in the digital broadcast and communication markets. However, if there is one defining feature of these systems, it is their overwhelming complexity. The present invention is predicated on the insight that the key to defeating complexity is to partition a problem at its points of articulation - in the present case to decouple the design of analogue RF hardware from the design of digital processing hardware by defining an open interface between them. This approach enables analogue RF component solutions to be built by analogue RF specialist companies and digital processing hardware to be built by different specialist companies, which may then rapidly be aggregated together to form higher-level solutions.

The term 'RF hardware' may refer to the analogue components device which simply transforms data to and from the digital domain at IF or 0Hz IQ. Analogue RF hardware typically presents a DAC and ADC to the open digital interface.

The digital interface enables high speed control and user data (i.e. content related data, such as speech etc.) to be sent between front-end, analogue RF processing units, and back-end, generic digital signal processing components, for use within basestation, test and prototyping products.

The interface may be extensible so that the overall system architecture need not be changed when processing different communications or broadcast standards.

The present invention utilises the User Datagram Protocol over IP (UDP/IP) to carry information. The configuration of RF hardware is realised using the Simple Network Management Protocol (SNMP), as many different technical specifications can be represented as a standard set of messages (e.g. Power Amplifier (PA) ramping, frequency tuning, etc.) coupled with a small set of application specific messages built from the standard set. Both UDP/IP and SNMP are open standards, again in contrast to the proprietary and closed protocols used in the prior art, monolithic designs.

Overall, by defining an open digital interface between analogue RF hardware and digital processing hardware, the following benefits are realised:

i) An open interface allows the integration of 3rd party analogue RF hardware and digital processing hardware in a single product and also the development of stand-alone test equipment for black-box software stack testing.

ii) The configuration of analogue RF hardware is presented as a standard set of messages which can be reused when developing wireless products for alternative standards.

iii) A manufacturer can focus resources on the development of the software stack to run on the digital processing hardware and migrate the solution towards an ASIC without complete knowledge of the analogue RF circuitry to be deployed. This is of particular benefit for User Equipment (UE) development.

• Further details of the invention are defined in the Claims.

• Digital processing hardware adapted to send digital data to, and to receive digital data from, analogue RF hardware, in which the digital data conforms to the open digital interface defined in the first aspect.

• Digital data which conforms to the open digital interface defined in the first aspect.

## BRIEF DESCRIPTION OF THE DRAWINGS

The invention will be described with reference to the accompanying drawings in which

**Figure 1** is a schematic showing how a generic baseband processor (GBP) platform utilises the present invention, in an implementation called OpenIF™, to connect to an analogue RF head;
**Figure 2** shows an example electrical interface;
**Figure 3** shows an OpenIF interface protocol stack;
**Figure 4** shows data packet frame construction in OpenIF;
**Figure 5** shows a User Data Header in OpenIF;
**Figure 6** shows CP Frame Construction in OpenIF;

## DETAILED DESCRIPTION

Communications and broadcast infrastructure design (and terminal prototyping systems design) is readily decomposed between the RF units, the digital processing hardware, and the software that executes upon that hardware. In this specification, a high level overview of a candidate for an open interface between the first of these two subsystems is described. This interface, termed OpenIF™, has been developed at RadioScape Limited, London, United Kingdom.

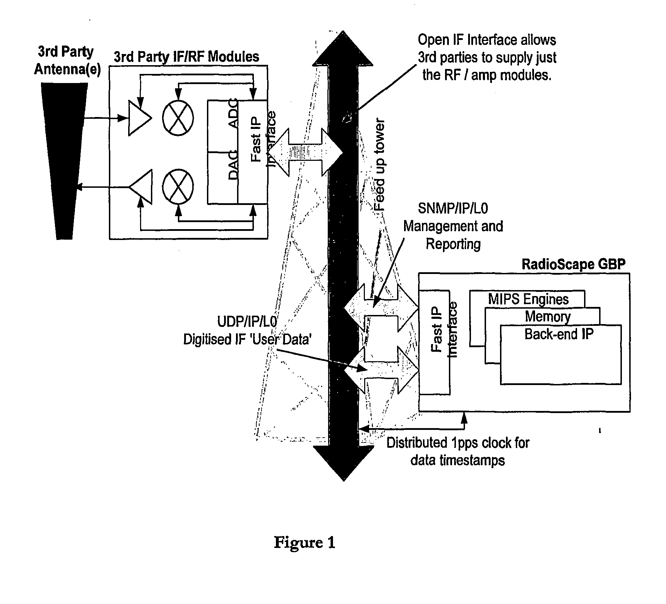

Consider **Figure 1,** which shows the RadioScape generic baseband processor (GBP) platform, and how it utilises OpenIF™ to connect to an RF head. The GBP platform is a FPGA/DSP substrate for high-bandwidth digital processing. It is designed to be a general-purpose high-performance DSP platform for the development and prototyping of modern communications applications. Because the requirements of specific applications will be different, the architecture is designed to be scalable through the use of a 'plug-in' modular architecture. One (or more) of the plug-in modules will be the analogue front end RF unit. An individual RF unit may be a receiver, a transmitter or both, and may generate / accept data at 0Hz IQ or a (relatively) low IF in the real-only domain. The range of frequencies supported by an individual RF board will be limited, but the OpenIF™ interface with the GBP is sufficiently generic to support applications in any frequency space. In the mobile communications domain it is assumed that the IF/RF hardware will be generating and receiving radio waves, but this does not prevent the possibility utilising other transmission media, such as optical fibre.

### Usage Scenarios

For the purposes of introducing the OpenIF™ interface, the development of a 3GPP W-CDMA UMTS basestation with an underlying LVDS bus technology has been considered. (However, bear in mind that there is nothing in the OpenIF™ definition that restricts it either to W-CDMA, infrastructure or bus LVDS as an underlying digital interconnect. For example, one could use OpenIF™ to connect the RF head for an IS-95 terminal emulation, with the digital interconnect hosted over Fibre Channel. Furthermore, although we will use the RadioScape GBP as the 'back end' digital signal processing engine, any other third party hardware could be used instead; this interoperability of RF and digital components being the entire point of the OpenIF™ protocol.)

On the transmit side, the GBP application will be generating an IF stream at a constant rate. In UMTS this rate will be 3.84 million chips per second (Mcps). In this example, software on the application side of the interface will be converting this into a digital representation of the required waveform with 8 times over-sampling and 16 bits per sample (so we will be sending the hardware 3.84 x 8 x 16 million bits per second; 492 Mbps, 62 Megabytes/second). However, the underlying LVDS bus technology will clock 16-bits at 40MHz providing a total bandwidth of 640 Mbps, catering for both data and signalling overhead to carry control messages as described in this specification. The data stream is broken down into frames and slots; in UMTS this will be 100 frames/second and 15 slots per frame. (This concept, with different values, can be carried into most communications protocols.) On the receive side, the RF unit will be collecting data from the analogue downconverter circuitry and digitising it for delivery back to the GBP. For a single antenna in a Node B (basestation) the data rates will be similar to the outbound stream, but for other protocols, for instance ADSL, this won't be the case. (Even with an application like a W-CDMA basestation we may choose different bits per sample in the up and downlinks.) In both cases, we assume that the final 'IF' is at 0Hz and that we have an IQ stream present, rather than a low-frequency real-only IF signal, which would be an alternative for this application.

Receive and Transmit Diversity introduces the concept of multiple antennas and multiplies the calculated bandwidths by 'n', the number of antennas in an array. OpenIf™ supports the concept of multiple arrays using multiple IP addressing. Each front end module is configured with it's own IP address, allowing the GBP to address groups of front end modules (i.e. multicasting) or single modules at a time. In the reverse direction the GBP maintains a single IP address where all front end receiver modules can direct received data.

### Digital Front End Interface

### An Example Electrical Interface

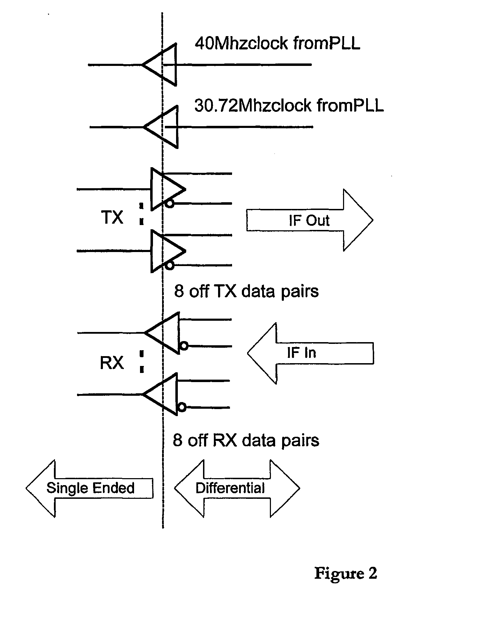

An example electrical interface, shown at **Figure 2**, is discussed briefly below. Again it is important to remember that the choice of LVDS represents only one possible option, shown here for the sake of being concrete.

The hardware interface is designed to fit into a PMC form factor. The connector is a 50-way high-density D socket. The electrical interface uses LVDS and the connector supports up to 25 differential pairs. There are separate transmit and receive channels, each of which supports 16-bit data on an 8-bit wide interface by clocking on alternate edges of the clock. A similar transfer scheme is used on the latest version of LVD SCSI, which can transfer words on each edge of a 40MHz clock over 12 metres. The channels on the open interface can easily support a data rate of up to 8 times the chip rate (30.72 Msamples/sec) over a similar distance.

Control, status and time stamp information are sent on the data channels, interleaved with the data as separate UDP/IP packets. The data transfer clock is increased to 40MHz to provide sufficient bandwidth for the data (at 30.72Mhz) and control/status. The time stamp (generated from a GPS 1pps signal) for the packet is kept and put back from transmit to receive.

**The Protocol Stack**

The OpenIF™ interface carries three different kinds of information flow between the GBP and the RF front end.

- The D-Plane (data-plane) carries 'user data' (i.e. content related data) - ADC or DAC information, either in real-only or IQ format, to and from the RF front end.
- The C-Plane (control-plane) carries control data to the front end (and appropriate responses and signalling back from it).
- The M-Plane (management-plane) carries management data to the RF front end (and appropriate responses and signalling back from it). M-Plane messages are much less dynamic in their application than those in the C-Plane.

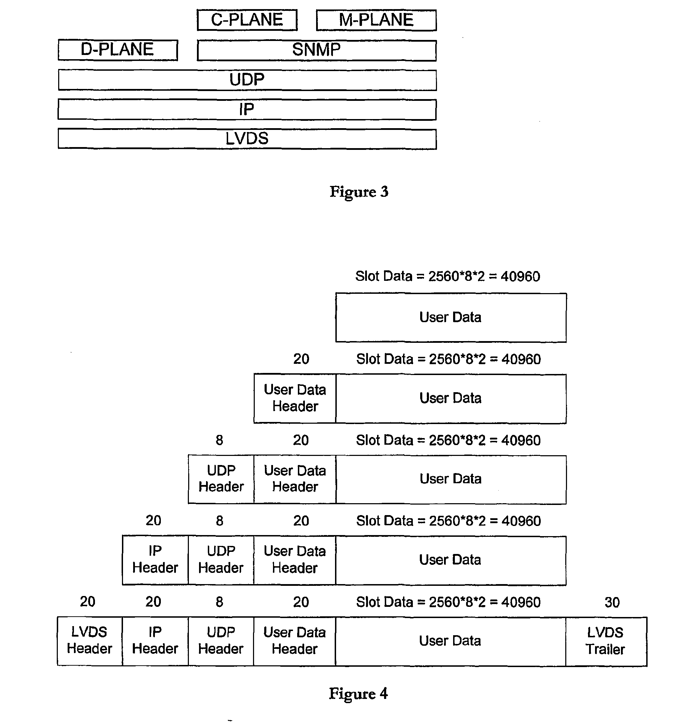

**Figure 3** shows an OpenIF interface protocol stack. As can be seen, all three types of data run off a single electrical interface using both IP and UDP. The control and management information uses SNMP to query and configure the hardware status. Note: while bus-LVDS has been described here (and is a synchronous protocol), other variants may be used, such as Ethernet, Fibre Channel, USB, etc. OpenIF™ is timestamped and so supports use over either synchronous or asynchronous underlying transports.

**Protocol Requirements**

The GBP communicates with the RF hardware (or vice versa) using either a Data Packet (DP), a Control Packet (CP), or a Management Packet (MP). Each type of packet shall be transmitted using the appropriate plane (see above).

The following frame construction is used when creating a DP for transmission to or from the RF hardware (all size header/payload sizes are in bytes). Note: for our particular example, the numbers in the User Data section represent a single slot of IF data (16-bit, eight times oversampling) in UMTS (2560 chips) and are for illustration purposes only. The actual user data length is included in the "User Data Header".

**Figure 4** shows DP Frame Construction. The content of the User Data Header shall consists of the following byte packed fields. Note: the LSB is considered to be at the right of the diagram.

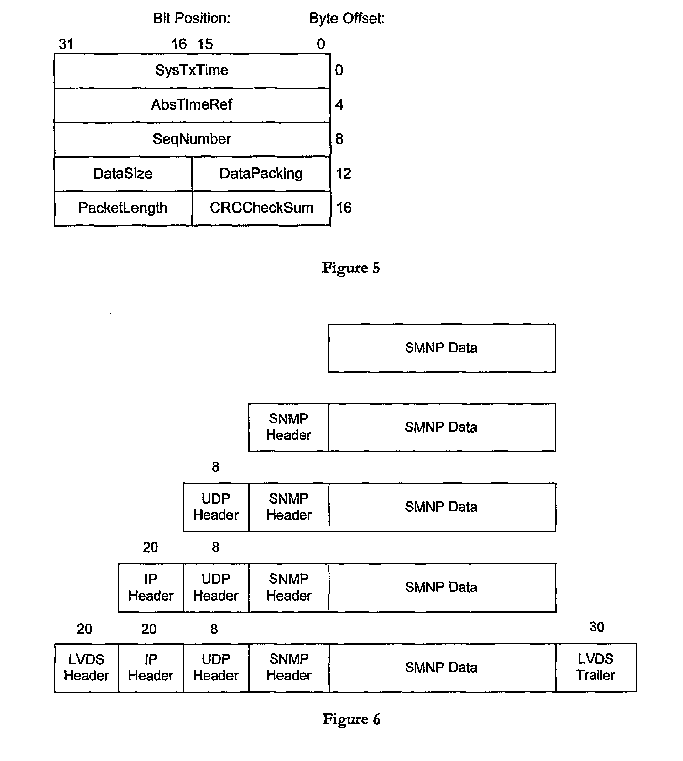

**Figure 5** shows the User Data Header. The individual fields in the User Data Header are defined as:

- SysTxTime, the system transmit time, is an application specific time construct indicating the transmit time for the current packet. Several default classes of time are defined for general use. These may be tied to the 1pps system reference if distribution across an asynchronous bearer is required.

- AbsTimeRef is an absolute time reference for the packet generated from the Generic Baseband Processor (GBP) and based on the distributed 1pps pulse.

- DataSize indicates the size of the individual data elements (8-bit, 16-bit, 32-bit, etc.)

- DataPacking indicates whether the data is packed as IF data (sequential samples) or an I/Q stream (alternating I/Q samples).

- Packet Length indicates the number of bytes of data in the User Data of a DP message.

- The CRC checksum of the User Data Header shall be generated using the following polynomial: (intial seed = 0)

$$G(D) = D^{16}+D^{12}+D^5+1$$

The diagram above represents a possible configuration for UMTS, other configurations for this example LVDS system might be:

| DATA PACKING | DATA SIZE | OVERSAMPLING | USER PACKET SIZE (BYTES) |
|---|---|---|---|
| IF Data | 32-bit samples | 4 | 40960 |
| IF Data | 8-bit samples | 4 | 20480 |
| I/Q Data | 16-bit samples | 4 | 40960 |
| I/Q Data | 8-bit samples | 4 | 20480 |

Note: the only limitation on configurations is the physical layer bandwidth, which in this example is limited by the 40MHz LVDS clock.

Data is assumed to be represented as signed 2s complement numbers, big-endian.

The structure of the IP header is defined by IPv4 and any applicable fields from the RFC 791 [Postel 1981a] official specification of IP, in addition the structure of the UDP header is defined in RFC 768 [Postel 1980]. It is important to remember that each analogue front module attached to the GBP has it's own IP address, thus both multi-casting (for simple transmit diversity) and single configurations are possible.

The content of the physical layer header and trailer consists of a preamble and frame delimiter portions, and optionally channel coding information, all of which are taken from the relevant specification (e.g. IEEE 802.3 for an Ethernet connection, etc.). The content of the physical layer header must provide a synchronisation mechanism (nb - this is only to allow the packet to be acquired; time synchronisation of the payload is accomplished through the use of the 1pps timestamp and associated offset) if an asynchronous physical layer is used. In this example, the LVDS header and trailer are proprietary structures consisting of a frame delimiter portion and a CRC checksum (Trailer only) of the User Data. The CRC checksum is generated with the following polynomial: (initial seed = 0)

$$G(D) = D^{16}+D^{12}+D^5+1$$

**Figure 6** shows CP Frame Construction to be used when creating a CP or MP for transmission to or from the hardware: All size header/payload sizes are in bytes. The structure of the SNMP header and data is defined in RFC 1157 [Case et al. 1990], which defines the format of the SNMP packets exchanged. Both are variable length structures.

Again, the content of the physical layer header and trailer shall ideally consist of a preamble and frame delimiter portions, and optionally channel coding information, all of which is taken from the relevant specification.

**RF Hardware Message Set**

The message set can be divided into the following domains:

1. Data, receive and transmit
2. Messages from the GBP to the front end hardware.
3. Information from the front end hardware to the GBP in response to queries.
4. Traps generated by the front end hardware in response to events therein.

Types 2-4 can be further sub-divided into generic and application/vendor specific messages. Type (1) messages are transmitted in Data Packets and the remaining messages in Control Packets or Management Packets.

**SNMP Specifics**

The data part of the communications are carried in the RadioScape proprietary message structure over UDP, as described previously. All the control and management messages, plus replies and traps will be carried using SNMP.

Through the adoption of SNMP, a generic monitoring system has effectively been introduced as a functional layer above the IP/UDP subsystem. Clearly, some SNMP specifics are required in order to allow the development of 3rd Party RF hardware that will function correctly with the 'back end' hardware (in this case, with a RadioScape GBP).

The fundamental object of SNMP is the Management Information Base (MIB). A MIB is conceptually a tree view of variables exposed to SNMP for getting and setting. The variables in this case are embedded within a specific RadioScape application. The MIB contains all information necessary to find, validate, get and set these variables.

This system requires two different representations of the same MIB. One MIB representation is the SNMP-standard text file in ASN.1 notation. This file can be imported into SNMP Management Software to give the manager access to RadioScape's exposed variables. The second representation is within the MIB database - an implementation-oriented viewpoint of the MIB.

**MIB Configuration**

RadioScape maintains a MIB subtree, branching from the 'enterprises' node in MIB-II according to RFC 1213 [McCloghrie and Rose 1991]. Every MIB for RadioScape GBP applications begins at:

- .iso.org.dod.internet.private.enterprises.
  radioscape.products.**rsGBP**

Further to this, the next entry is an identifier (with an associated MIB) for the open IF interface.

- .iso.org.dod.internet.private.enterprises.
  radioscape.products.rsGBP.**IFInterface**

Further to this, the next entry is an identifier (with an associated MIB) for any extra messages required for a specific product or application, for instance a UMTS basestation.

- .iso.org.dod.intexnet.private.enterprises.
  radioscape.products.rsGBP.IFInterface.**UMTS**

**SNMP Controlled Variables**

The following tables indicate the values that are communicated between the IF hardware and the GBP using the SNMP packets in the physical stream. The variable names used correspond to entries in the MIB defined above. The values in the attributes column consist of an ordered triplet, (Indexed, Access, Type).

Indexed can be Y (yes) or N (no), Access can be RO (read only), WO (write only), RW (read and write) and Type can be I (an integer) or S (a string). Note that a particular value may be indicated as writable but a particular implementation might not support this. Similarly some devices might not be able to support the full range of some parameters.

All messages may be times tamped either to a slot/frame boundary or a absolute (i.e. wrt the 1pps distributed clock) if required.

**Generic Messages**

Please note that these have not been partitioned here between C and M-planes for simplicity.

**General Configuration:** provides the ability to get and set core parameters for the expected user data format. Most signals can be divided into a three level hierarchy, samples, slots and frames. This matches nicely into W-CDMA, and most communications strategies have equivalent concepts. The interface supports the following values. Note the number of bits used by the ADC/DAC might be fewer than those actually in transmitted per sample.

| VARIABLE NAME | ATTRIBUTES | RANGE |
|---|---|---|
| Rx_samples_pef_slot | N, RW, I | $1-(2^{31}-1)$ |
| Rx_slots_per_frame | N, RW, I | $1-(2^{31}-1)$ |
| Rx_bits_per_sample | N, RW, I | 1-31 |
| Rx_adc_bits | N, RW, I | 1-31 |
| Tx_samples_per_slot | N, RW, I | $1-(2^{31}-1)$ |

Table continued

| VARIABLE NAME | ATTRIBUTES | RANGE |
|---|---|---|
| Tx_slots_per_frmne | N, RW, I | 1- $(2^{31}-1)$ |
| Tx_bits_per_sample | N, RW, I | 1-31 |
| Tx_dac_bits | N, RW, I | 1-31 |

**RF Center Frequency:** Will provide the ability to get and set the centre frequency of the RF signals being transmitted/received. The frequency will be set as two integers, a number in the range 1-$(2^{31}-1)$ and an exponent in the range 1-31. This will support frequencies in the range 1 to 2 x $10^{40}$Hz.

| VARIABLE NAME | ATTRIBUTES | RANGE |
|---|---|---|
| Rx_centre_frequenry_exponent | N, RW, I | 1-31 |
| Rx_centre_frequency_value | N, RW, I | 1-$(2^{31}-1)$ |
| Tx_centre_frequency_exponent | N, RW, I | 1-31 |
| Tx_centre_frequency_value | N, RW, I | 1 - $(2^{31}-1)$ |

**Fine Frequency Control:** If the software believes that the centre frequency is not correct it can issue fine frequency control commands. These will adjust the centre frequency up or down by the specified amount. The increments below are measured 1/1000$^{th}$ of a Hz.

| VARIABLE NAME | ATTRIBUTES | RANGE |
|---|---|---|
| Rx_adjust_frequency | N, RW, I | -32768-32767 |
| Tx_adjust_frequency | N, RW, I | -32768-32767 |

**Power Control:** These messages are indexed so that we can read/set the power of the individual RF output endpoints. The 'max' messages find the range of powers available in the RF component. The following ranges are measured in 1/10$^{th}$ of a dBm. Relative power control, and absolute and relative power measurement messages are defined as part of the full OpenIF™ specification, but are not discussed here for simplicity.

| VARIABLE NAME | ATTRIBUTES | RANGE |
|---|---|---|
| Rx_power_max | Y, RO, I | -32768-32767 |
| Rx_power | Y, RO, I | -32768-32767 |
| Tx_power_max | Y, RO, I | -32768-32767 |
| Tx_power | Y, RW, I | -32768-32767 |

**RF Status Messages:** Again these messages are indexed so that we can read/set the power of the individual tx/rx elements. These messages are designed to inform the GBP of the current status of the hardware. The 'max' messages determine the permissible range of each variable monitored.

| VARIABLE NAME | ATTRIBUTES | RANGE |
|---|---|---|
| Rx_agc_value | Y, RO, I | 0-65535 |
| PA_Voltage | Y, RO, I | -32768-32767 (1/10$^{th}$ V) |
| PA_Voltage_max | Y, RO, I | -32768 - 32767 (1/10$^{th}$ V) |
| PA_Current | Y, RO, I | -32768-32767 (1/10$^{th}$ A) |
| PA_Current_max | Y, RO, I | -32768 - 32767 (1/10$^{th}$ A) |

Table continued

| VARIABLE NAME | ATTRIBUTES | RANGE |
| --- | --- | --- |
| Tx_temperature | Y, RO, I | -32768 - 32767 (°C x 100) |
| Tx_temperature_max | Y, RO, I | -32768 - 32767 (°C x 100) |
| Rx/Tx frequency stability | Y, RO, I | -32768 - 32767 (1/100$^{th}$ ppm) |
| Rx/Tx stability_max | Y, RO, I | -32768 - 32767 (1/100$^{th}$ ppm) |

**Frame/Slot Configuration:** The following messages are indexed so that we can enable and disable the power on a per slot basis.

| VARIABLE NAME | ATTRIBUTES | RANGE |
| --- | --- | --- |
| Ssdt_frame | Y, WO, I | Frame number on which to apply the ssdt value |
| Ssdt_value | Y, RW, I | 1 = turn power on<br>0 = turn power off |

**Trap Messages:** The following error conditions will generate trap messages from the RF hardware to the GBP.

| VARIABLE NAME | ATTRIBUTES | ERROR |
| --- | --- | --- |
| Tx_power | Y, RW, I | > Tx_power_max |
| Rx_power | Y, RO, I | > Rx_power_max |
| Rx/Tx frequency stability | Y, RO, I | |>| Stability_max |
| Tx_temperature | Y, RO, I | > Tx_temperature_max |
| PA_Voltage | Y, RO, I | > PA_Voltage_max |
| PA_Current | Y, RO, I | > PA_Current_max |

Additionally the font end hardware shall generate a trap message if a CP timeout condition is reached, whereby the hardware has received no control messages for a set period of time.

**Simple Example**

An example of a specific UMTS message sequence for a single slot transmission might be:

- configure the number of samples per slot (Tx_samples_per_slot),
- configure the number of bits per sample (Tx_bits_per_sample),
- configure the number of dac bits (Tx_dac_bits),
- configure the transmitter power Qx_power),
- configure the transmitter center frequency (Tx_centre_frequency_exponent, Tx_centre_frequency_value)
- and finally, enable the power for the appropriate slot if has not already been enabled (ssdt_frame,ssdt_value).

**Application Specific Messages**

These are commands specific to a specific implementation, although it may be possible to make some of them generic. These will be defined as a separate SNMP MIB.
The RF module's vendor may also wish to support additional vendor specific commands. These are defined in a separate vendor supplied SNMP MIB.
The OpenIF™ protocol also allows for introspection and announcement using the standard SNMP mechanisms; this allows e.g. a GBP to find out dynamically what RF components it has attached and what their capabilities are, prior to any communication.

**OpenIF™ summary**

- OpenIF™ is an open RF/digital domain interface that makes extensive use of existing protocol technology (UDP/IP and SNMP).
- The control and management of the connected RF hardware is performed through a standard set of messages, which can be reused when developing wireless products for alternative telecommunication standards.
- OpenIF™ allows the integration of 3rd party RF hardware and even the development of standardised test equipment for approval testing of software stacks.
- OpenIf™ allows the manufacturer to migrate the developed software solution to an ASIC without complete knowledge of the RF hardware to be deployed.
- OpenIF™ allows the manufacturer to focus resources on the development of alternative telecommunication standards instead of re-inventing RF configuration and management systems.
- OpenIF™ allows RF vendors to concentrate on providing a good analogue product, without the burden of providing the increasingly complex digital component, and similarly frees the provider of the digital processing system from the vagaries of analogue hardware. This should increase the number of players able to participate in the market, thereby increasing competition and so reducing price while increasing product availability and quality.
- OpenIF™ promotes reuse of hardware on both the digital and analogue sides across multiple systems and, where appropriate, multiple standards.
- OpenIF™ supports antenna arrays and antenna diversity through the use of IP endpoint addressing.

**Bibliography**

| REF. | TITLE | AUTHOR/ SOURCE |
|---|---|---|
| RFC 791 | Official specification of IP | Postel 1981a |
| RFC 768 | UDP Header | Postel 1980 |
| RFC 1157 | The structure of the SNMP header. | Case et al. 1990 |
| RFC 1213 | SNMP MIBs | McCloghrie and Rose 1991 |
| Physical Radio Interface Specification | http://www.sdrforum.org/docs/mmits-docs/glomo_phyr_int.pdf | Dave Beyer (Rooftop Comms) 1998 |

**Claims**

1. Digital processing apparatus adapted to send digital data to, and to receive digital data from, analogue RF hardware, in which the apparatus sends and receives the data using an open communications protocol with a publicly available specification that is generic and not custom designed for either the digital processing apparatus or the analogue RF hardware, **characterised in that** the lower layers of the open communications protocol are based on the open transport and management protocols UDP/IP and SNMP.

2. The apparatus of Claim 1 in which messages are formed using separate packets for content related data, control data and management data.

3. The apparatus of Claim 2 in which a packet for content related data uses a header which defines data packing as either sequential IQ signals or a real IF stream.

4. The apparatus of Claim 3 in which control and management data packets are re-useable across several different communications standards.

5. The apparatus of Claim 1 in which message types selected from the following list of message types are used:

    (a) reception and transmission of content related data;

(b) control and management messages from the digital processing hardware to the analogue RF hardware;
(c) responses from the analogue RF hardware to queries from the digital processing hardware;
(d) traps generated by the analogue RF hardware.

6. The apparatus of Claim 1 which is extensible.

7. The apparatus of Claim 1 in which time stamp data is generated to allow use of synchronous as well as asynchronous transports.

8. The apparatus of Claim 1 in which the steps of introspection and announcement occur in order to enable dynamic discovery of the capabilities of the analogue RF hardware.

9. The apparatus of Claim 1 in which IP endpoint addressing is used to enable antenna arrays to be addressed.

10. The apparatus of Claim 1 in which the digital processing hardware supports software defined radio.

11. Analogue RF hardware adapted to send digital data to, and to receive digital data from, the digital processing apparatus as claimed in any preceding Claim 1 - 10, in which the analogue RF hardware sends and receives the data using an open communications protocol with a publicly available specification that is generic and not custom designed for either the digital processing apparatus or the analogue RF hardware, **characterized in that** the lower layers of the open communications protocol are based on the open transport and management protocols UDP/IP and SNMP.

12. A software defined radio basestation comprising the digital processing apparatus as claimed in any preceding Claim 1-10 and the analogue RF hardware of Clam 11.


**Patentansprüche**

1. Vorrichtung zur digitalen Verarbeitung, angepasst, um digitale Daten zu einer analogen RF-Hardware zu senden und von dieser zu empfangen, bei dem die Vorrichtung Daten sendet und empfängt, indem ein offenes Kommunikationsprotokoll mit einer öffentlich zugänglichen Spezifikation verwendet wird, die generisch ist und nicht auf den Kundenbedarf zugeschnitten ist für entweder die Vorrichtung zur digitalen Verarbeitung oder für die analoge RF-Hardware, **dadurch gekennzeichnet, dass** die unteren Schichten des offenen Kommunikationsprotokolls auf dem offenen Übertragungs- und Managementprotokollen UDP/IP und SNMP basieren.

2. Die Vorrichtung nach Anspruch 1, bei der Meldungen gebildet werden, indem separate Pakete für inhaltsbezogene Daten, für Steuerungsdaten und für Managementdaten verwendet werden.

3. Die Vorrichtung nach Anspruch 2, bei der ein Paket für inhaltsbezogene Daten einen Header verwendet, der die Datenpackung entweder als sequentielle IQ-Signale oder als realen IF-Strom definiert.

4. Die Vorrichtung nach Anspruch 3, bei der die Steuerungs- und Managementdaten-Pakete über verschiedene Kommunikationsstandards wieder verwendbar sind.

5. Die Vorrichtung nach Anspruch 1, bei dem Typen von Meldungen verwendet werden, die aus der folgenden Liste ausgewählt sind:

   (a) Empfang und Übertragung von inhaltsbezogenen Daten;
   (b) Steuerungs- und Managementmeldungen von der Hardware zur digitalen Verarbeitung zu der analogen RF-Hardware;
   (c) Antworten von der analogen RF-Hardware auf Fragen von der Hardware zur digitalen Verarbeitung;
   (d) von der analogen RF-Hardware erzeugte Traps.

6. Die Vorrichtung nach Anspruch 1, die extensibel ist.

7. Die Vorrichtung nach Anspruch 1, bei der Zeitstempeldaten erzeugt werden, um die Verwendung von synchronen sowie von asynchronen Übertragungen zu ermöglichen.

**8.** Die Vorrichtung nach Anspruch 1, bei der die Schritte der Introspektion und der Anmeldung stattfinden, um die dynamische Entdeckung der Leistungsfähigkeiten der analogen RF-Hardware zu ermöglichen.

**9.** Die Vorrichtung nach Anspruch 1, bei der die IP-Endpunkt-Adressierung verwendet wird, um zu ermöglichen, dass die Antennenanlage adressiert wird.

**10.** Die Vorrichtung nach Anspruch 1, bei der die Hardware zur digitalen Verarbeitung softwaredefinierten Funk unterstützt.

**11.** Analoge RF-Hardware, angepasst, um digitale Daten zu einer Vorrichtung zur digitalen Verarbeitung nach einem der vorhergehenden Ansprüche 1-10 zu senden und von dieser zu empfangen, bei dem die analoge RF-Hardware Daten sendet und empfängt, indem ein offenes Kommunikationsprotokoll mit einer öffentlich zugänglichen Spezifikation verwendet wird, die generisch ist und nicht auf den Kundenbedarf zugeschnitten ist für entweder die Vorrichtung zur digitalen Verarbeitung oder für die analoge RF-Hardware, **dadurch gekennzeichnet, dass** die unteren Schichten des offenen Kommunikationsprotokolls auf dem offenen Übertragungs- und Managementprotokollen UDP/IP und SNMP basieren.

**12.** Eine softwaredefinierte Basisstation, die die Vorrichtung zur digitalen Verarbeitung nach einem der vorhergehenden Ansprüche 1-10 und die analoge RF-Hardware nach Anspruch 11 umfasst.

**Revendications**

**1.** Système de traitement numérique adapté pour envoyer des données numériques et recevoir des données numériques vers et depuis du matériel de radiofréquence analogique, où le système envoie et reçoit des données en utilisant un protocole de communication ouvert, dont la spécification est publiquement disponible, générique et non personnalisée que ce soit en ce qui concerne le système de traitement numérique ou bien le matériel de radiofréquence analogique, **caractérisé en ce que** les couches inférieures du protocole de communication ouvert sont basées sur les protocoles ouverts d'administration et de transport UDP/IP et SNMP.

**2.** Le système selon la revendication 1 dans lequel les messages sont conçus à partir de paquets séparés pour les données reliées, le contrôle et la gestion des données.

**3.** Le système selon la revendication 2 dans lequel un paquet pour des données reliées utilise un en-tête qui définit la mise en paquet des données soit comme des signaux IQ séquentiels ou bien comme un flux réel de fréquence intermédiaire.

**4.** Le système selon la revendication 3 dans lequel les paquets de données de contrôle et d'administration sont réutilisables à travers plusieurs standards de communication différents.

**5.** Le système selon la revendication 1 dans lequel les types de message utilisés sont sélectionnés parmi la liste suivante de types de message :

(a) réception et transmission de données reliées ;
(b) messages de contrôle et d'administration émis par le matériel de traitement numérique vers le matériel de radiofréquence analogique ;
(c) réponses du matériel de radiofréquence analogique à des requêtes émises par le matériel de traitement numérique ;
(d) déroutements provoqués par le matériel de radiofréquence analogique.

**6.** Le système selon la revendication 1 qui n'est pas limité.

**7.** Le système selon la revendication 1 dans lequel l'estampille temporelle est produite pour permettre l'utilisation des transports synchrones et asynchrones.

**8.** Le système selon la revendication 1 dans lequel les étapes d'introspection et d'annonce se produisent de sorte à permettre la découverte dynamique des capacités du matériel de radiofréquence analogique.

9. Le système selon la revendication 1 dans lequel l'on utilise une invitation à recevoir le point limite IP afin de permettre aux réseaux d'antennes d'être invités à recevoir.

10. Le système selon la revendication 1 dans lequel le matériel de traitement numérique comprend une radio logicielle.

11. Matériel de radiofréquence analogique adapté pour envoyer des données numériques et recevoir des données numériques vers et depuis du système de traitement numérique selon quelconque des revendications allant de 1 à 10, où le matériel de radiofréquence analogique envoie et reçoit des données en utilisant un protocole de communication ouvert, dont la spécification est publiquement disponible, générique et non personnalisée que ce soit en ce qui concerne le système de traitement numérique ou bien le matériel de radiofréquence analogique, **caractérisé en ce que** les couches inférieures du protocole de communication ouvert sont basées sur les protocoles ouverts d'administration et de transport UDP/IP et SNMP.

12. Un logiciel de RBS (station de base radio) comprenant le système de traitement numérique selon quelconque des revendications allant de 1 à 10 et du matériel de radiofréquence analogique selon la revendication 11.

Figure 1

40Mhzclock fromPLL

30.72Mhzclock fromPLL

TX

IF Out

8 off TX data pairs

RX

IF In

8 off RX data pairs

Single Ended   Differential

Figure 2

| C-PLANE | M-PLANE |
|---|---|

| D-PLANE | SNMP |
|---|---|

| UDP |
|---|

| IP |
|---|

| LVDS |
|---|

Figure 3

Slot Data = 2560*8*2 = 40960

| User Data |
|---|

| 20 | Slot Data = 2560*8*2 = 40960 |
|---|---|

| User Data Header | User Data |
|---|---|

| 8 | 20 | Slot Data = 2560*8*2 = 40960 |
|---|---|---|

| UDP Header | User Data Header | User Data |
|---|---|---|

| 20 | 8 | 20 | Slot Data = 2560*8*2 = 40960 |
|---|---|---|---|

| IP Header | UDP Header | User Data Header | User Data |
|---|---|---|---|

| 20 | 20 | 8 | 20 | Slot Data = 2560*8*2 = 40960 | 30 |
|---|---|---|---|---|---|

| LVDS Header | IP Header | UDP Header | User Data Header | User Data | LVDS Trailer |
|---|---|---|---|---|---|

Figure 4

Bit Position: | Byte Offset:

| 31 | 16 15 | 0 | |
|---|---|---|---|
| SysTxTime | | | 0 |
| AbsTimeRef | | | 4 |
| SeqNumber | | | 8 |
| DataSize | DataPacking | | 12 |
| PacketLength | CRCCheckSum | | 16 |

**Figure 5**

| SMNP Data |
|---|

| SNMP Header | SMNP Data |
|---|---|

8

| UDP Header | SNMP Header | SMNP Data |
|---|---|---|

20     8

| IP Header | UDP Header | SNMP Header | SMNP Data |
|---|---|---|---|

20    20    8                        30

| LVDS Header | IP Header | UDP Header | SNMP Header | SMNP Data | LVDS Trailer |
|---|---|---|---|---|---|

**Figure 6**